# EUROPÄISCHE PATENTSCHRIFT

(11) **EP 1 013 944 B1**
(45) Veröffentlichungstag und Bekanntmachung des Hinweises auf die Patenterteilung: **09.02.2005**
(21) Anmeldenummer: 99811144.7
(22) Anmeldetag: 13.12.1999
(51) Int. Cl.: F16B 19/00, F16B 19/14

(54) **Befestigungselement**
Fastening element
Elément de fixation

(30) Priorität: 21.12.1998 DE 19859130
(43) Veröffentlichungstag der Anmeldung: 28.06.2000
(73) Patentinhaber: HILTI Aktiengesellschaft, 9494 Schaan (LI)
(72) Erfinder: Rohrmoser, Günter, 6812 Meiningen (AT); Schlosser, Reimund, 6800 Feldkirch (AT); Hasler, Roland, 9490 Vaduz (LI)
(74) Vertreter: Wildi, Roland

(56) Entgegenhaltungen:
- US-A- 4 286 496

## Beschreibung

Die Erfindung betrifft ein Befestigungselement gemäss dem Oberbegriff des Patentanspruchs 1.

Aus der DE-976 035 ist ein Befestigungselement mit einem Nagel und einem den Schaft des Nagels umgebenden Führungselement bekannt. Das Führungselement dient der koaxialen Ausrichtung des Nagels in einem entsprechenden Aufnahmebereich eines Setzgerätes und setzt sich aus einem im wesentlichen zylindrischen Grundkörper mit einer zentralen Durchgangsbohrung sowie drei gleichmässig am Umfang des Grundkörpers verteilt angeordneten Längsrippen zusammen. Die Längsrippen erstrecken sich über die gesamte Länge des Führungselementes und überragen in radialer Richtung den Aussendurchmesser des an einem freien Ende des Nagels befindlichen Kopfes.

Da sich die der reibschlüssigen Verbindung des Führungselementes in dem Aufnahmebereich des Setzgerätes dienenden Längsrippen über die gesamte Länge des Führungselementes erstrecken, können Reibkräfte entstehen, die höher sind als die Reibkraft im Bereich der Durchgangsbohrung zwischen dem Schaft des Nagels und dem Führungselement. Dies führt beispielsweise beim Eintreiben des Nagels in einen harten Untergrund zu einer Verschiebung des Führungselementes auf dem Schaft des Nagels und dadurch zu einer unzureichenden Führung des Befestigungselementes in dem Aufnahmebereich des Setzgerätes. Eine schlechte Führung des Befestigungselementes kann zu Setzausfällen oder zu Beschädigungen des Setzgerätes führen.

Der Erfindung liegt die Aufgabe zugrunde, ein Befestigungselement zu schaffen, das mit geringer Kraft in den Aufnahmebereich des Setzgerätes einsetzbar ist, in dem Aufnahmebereich sicher geführt wird und mit einer geringen Kraft aus dem Aufnahmebereich des Setzgerätes ausstossbar ist.

Die Lösung dieser Aufgabe erfolgt durch ein Befestigungselement, welches die im kennzeichnenden Abschnitt des Patentanspruchs 1 angeführten Merkmale aufweist.

Die eigentliche Führung des Befestigungselementes in dem entsprechenden Aufnahmebereich eines Setzgerätes übernehmen die Längsrippen. Die an den Längsrippen angeordneten Klemmzungen ermöglichen eine reibschlüssige Festlegung des Befestigungselementes in dem entsprechenden Aufnahmebereich des Setzgerätes und sorgen dafür, dass das Befestigungselement nicht aus dem Aufnahmebereich des Setzgerätes fällt, wenn das Setzgerät derart gehalten wird, dass die Öffnung des Aufnahmebereiches nach unten hin gerichtet ist.

Eine grosse Verformung der Klemmzungen wird verhindert, wenn vorzugsweise die Klemmzunge eine von den freien Enden der Längsrippen gebildete Hüllkurve um einen Betrag überragt, der dem 0,02 bis 0,09-fachen Hüllkurvendurchmesser entspricht.

Die Höhe der Reibkraft zwischen dem Aufnahmebereich des Setzgerätes und den Klemmzungen kann über deren parallel zur Längserstreckung der Längsrippen verlaufende Erstreckung gesteuert werden. Vorteilhafterweise erstreckt sich jede der Klemmzungen über einen Teil der gesamten Länge des Grundkörpers.

Sehr gute elastische Eigenschaften der Klemmzunge werden erreicht, indem vorzugsweise die Klemmzunge von einer sich über die gesamte Länge des Grundkörpers erstreckenden Vertiefung im freien Endbereich der Längsrippen abragt.

Um eine elastische Verbindung zwischen der Längsrippe und dem Grundkörper erreichen zu können, erweitert sich zweckmässigerweise die Aussenkontur eines senkrecht zur Längserstreckung der Längsrippe verlaufenden Querschnittes der Längsrippe zu deren freien Ende hin. Der geringere Querschnitt der Längsrippe im Umfangsbereich des Grundkörpers bildet beispielsweise eine Art Drehachse, um die sich die Längsrippe bewegen kann.

Aus herstelltechnischen Gründen erstreckt sich zweckmässigerweise senkrecht zur einer den Winkel zwischen zwei benachbarten Längsrippen halbierenden Achse eine zur Führung des Nagels beitragende Fläche. Diese Fläche ist Teil einer Innenkontur der zentralen Durchgangsbohrung. Weist das Führungselement beispielsweise drei Längsrippen auf, so weist die Innenkontur der zentralen Durchgangsbohrung beispielsweise drei unter gleichen Winkeln zueinander angeordnete Flächen auf, die der Aufnahme und der Führung eines das Führungselement durchsetzenden Nagels dienen.

Damit sich die Innenkontur der zentralen Durchgangsbohrung an den Schaft des Nagels und die Klemmzungen an den Aufnahmebereich eines Setzgerätes, in dem das Befestigungselement einsetzbar ist, anpassen können, ist vorteilhafterweise das Führungselement von einem elastischen Material gebildet.

Die Erfindung wird anhand von Zeichnungen, die ein Ausführungsbeispiel wiedergeben, näher erläutert. Es zeigen:
- Fig.1: ein erfindungsgemässes Befestigungselement mit einem Nagel und einem Führungselement;
- Fig. 2: einen Schnitt durch das Befestigungselement gemäss Fig. 1 entlang der Linie II-II.

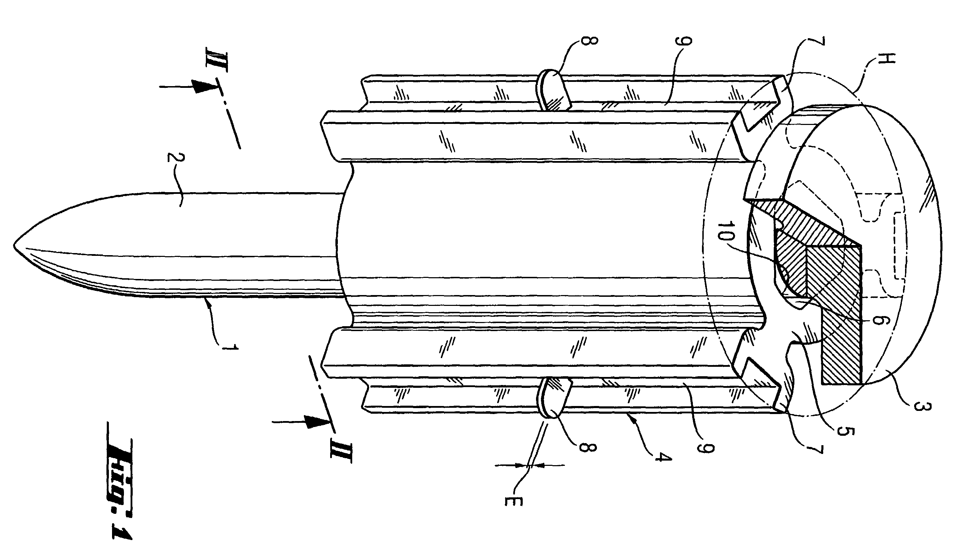

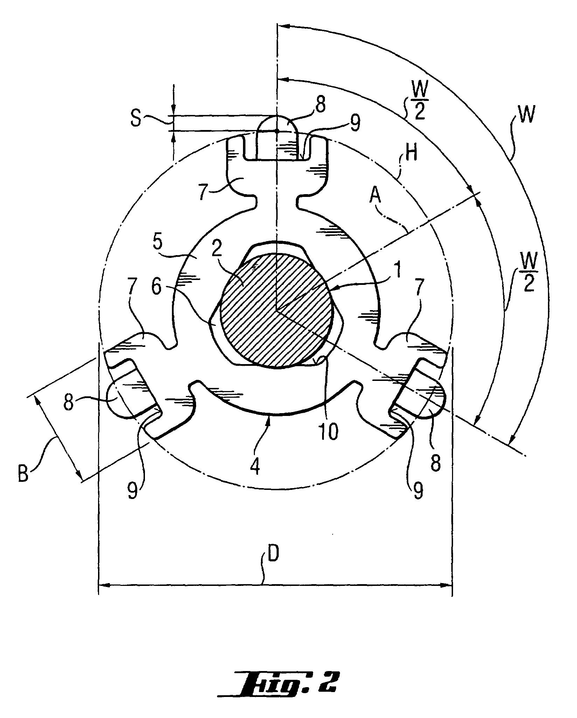

Das in den Fig. 1 und 2 dargestellte Befestigungselement setzt sich aus einem Nagel 1 und einem Führungselement 4 zusammen. Der Nagel 1 weist einen Schaft 2 auf, der an einem ersten freien Ende zu einer Spitze zusammenläuft. Das zweite freie Ende des Nagels 1 ist mit einem den Schaft 2 radial überragenden Kopf 3 versehen.

Das den Schaft 2 des Nagels 1 umgebende Führungselement 4 wird gebildet von einem im wesentlichen zylindrisch ausgebildeten Grundkörper 5, von dessen Umfang gleichmässig verteilt drei Längsrippen 7 abragen, die sich über die gesamte Länge des Grundkörpers 5 erstrecken. Die senkrecht zur Längserstreckung des Führungselementes 4 gemessene Breite B der Längsrippen 7 nimmt zu deren freien Ende hin zu. Das Führungselement 4 weist eine zentrale Durchgangsbohrung 6 auf, die der Aufnahme und der Führung des Nagels 1 dient.

Jede der Längsrippen 7 weist an deren freien Endbereich eine im wesentlichen U-förmig ausgebildete Vertiefung 9 auf, die sich über die gesamte Länge der Längsrippe 7 erstreckt. Innerhalb jeder dieser Vertiefungen 9 ist eine Klemmzunge 8 angeordnet, die das freie Ende der Längsrippe 7 in radialer Richtung überragt. Die Erstreckung E dieser Klemmzunge 8 in einer parallel zur Längserstreckung der Längsrippe 7 verlaufenden Richtung kann der 0,02 bis 0,08-fachen Gesamtlänge des Grundkörpers 5 entsprechen. Die Erstreckung E der Klemmzunge 8 entspricht in dem dargestellten Ausführungsbeispiel der 0,02-fachen Gesamtlänge der Längsrippe 7.

Senkrecht zu einer den Winkel W zwischen einander benachbarten Längsrippen 7 halbierenden Achse A erstreckt sich eine Fläche, die Teil der Innenkontur 10 der zentralen Durchgangsbohrung 6 des Grundkörpers 5 ist. Die Innenkontur 10 weist insgesamt drei Flächen auf, die unter gleichen Winkeln zueinander angeordnet sind. Die reibschlüssige Verbindung des Führungselementes 4 mit dem Schaft 2 des Nagels 1 erfolgt über diese Flächen. Eine von diesen Flächen eingeschlossene Hüllkurve ist geringfügig kleiner ausgebildet als ein Durchmesser des Schaftes 2 des Nagels 1, damit der in der zentralen Durchgangsbohrung 6 des elastischen Führungselementes 4 eingesetzte Nagel 1 auch in diesem reibschlüssig festlegbar ist.

Der Kopf 3 des Nagels 1 weist einen Aussendurchmesser auf, der kleiner ist als ein von den freien Enden der Längsrippen 7 - ohne die Klemmzungen 8 - gebildeter Hüllkurvendurchmesser D.

## Patentansprüche

1. Befestigungsetement mit einem einen Schaft (2) und einen Kopf (3) aufweisenden Nagel (1) zum Eintreiben in harte Werkstoffe wie Beton, Gestein, Stahl und dergleichen sowie einem Führungselement (4), das einen im wesentlichen zylindrischen Grundkörper (5) mit einer zentralen Durchgangsbohrung (6) sowie drei gleichmässig am Umfang des Grundkörpers (5) angeordnete Längsrippen (7) aufweist, die sich über die gesamte Länge des Grundkörpers (5) erstrecken und in der Axialprojektion die Umfangskontur des Kopfes (3) des Nagels (1) radial überragen, **dadurch gekennzeichnet, dass** an jeder Längsrippe (7) wenigstens eine Klemmzunge (8) angeordnet ist, die eine von den Längsrippen (7) gebildete Hüllkurve (H) in radialer Richtung überragt.

2. Befestigungselement nach Anspruch 1, **dadurch gekennzeichnet, dass** die Klemmzunge (8) die Hüllkurve (H) um einen Betrag (S) überragt, der dem 0,02 bis 0,09-fachen Hüllkurvendurchmesser (D) entspricht.

3. Befestigungselement nach Anspruch 1 oder 2, **dadurch gekennzeichnet, dass** sich die Klemmzunge (8) über einen Teil der gesamten Länge des Grundkörpers (5) erstreckt.

4. Befestigungselement nach einem der Ansprüche 1 bis 3, **dadurch gekennzeichnet, dass** die Erstreckung (E) der Klemmzunge (8) der 0,02 bis 0,08-fachen Gesamtlänge des Grundkörpers (5) entspricht.

5. Befestigungselement nach einem der Ansprüche 1 bis 4, **dadurch gekennzeichnet, dass** die Klemmzunge (8) von einer sich über die gesamte Länge des Grundkörpers (5) erstreckenden Vertiefung (9) im freien Endbereich der Längsrippen (7) abragt.

6. Befestigungselelment nach einem der Ansprüche 1 bis 5, **dadurch gekennzeichnet, dass** sich die Aussenkontur der Längsrippe (7) zu deren freien Ende hin erweitert.

7. Befestigungselement nach einem der Ansprüche 1 bis 6, **dadurch gekennzeichnet, dass** sich senkrecht zur einer den Winkel (W) zwischen zwei benachbarten Längsrippen (7) halbierenden Achse (A) eine Fläche erstreckt, die Teil einer Innenkontur (10) der zentralen Durchgangsbohrung (6) ist.

8. Befestigungselement nach einem der Ansprüche 1 bis 7, **dadurch gekennzeichnet, dass** das Führungselement (4) von einem elastischen Material gebildet ist

## Claims

1. Fastener having a nail (1) which incorporates a shank (2) and a head (3), for driving it into hard materials such as concrete, stone, steel and the like, and having a guide element (4) which incorporates a substantially cylindrical base body (5) with a central passage (6) and three longitudinal fins (7) which are arranged uniformly around the circumference of the base body (5), extending the full length of the base body (5) and in the axial projection protruding radially beyond the circumferential contour of the head (3) of the nail (1), **characterised in that** arranged on each longitudinal fin (7) is at least one locking tab (8) which protrudes radially beyond the generating curve (H) of an envelope, constituted by the longitudinal fins (7).

2. Fastener according to claim 1, **characterised in that** the locking tab (8) protrudes beyond the generating curve (H) of the envelope by an amount (S) corresponding to 0.02 to 0.09 times the diameter (D) of the generating curve of the envelope.

3. Fastener according to claim 1 or 2, **characterised in that** the locking tab (8) extends for part of the full length of the base body (5).

4. Fastener according to any one of claims 1 to 3, **characterised in that** the extension (E) of the locking tab (8) corresponds to 0.02 to 0.08 times the overall length of the base body (5).

5. Fastener according to any one of claims 1 to 4, **characterised in that** the locking tab (8) juts away from a depression (9) which extends the full length of the base body (5), in the free end region of the longitudinal fins (7).

6. Fastener according to any one of claims 1 to 5, **characterised in that** the external contour of the longitudinal fin (7) broadens out towards the free end thereof.

7. Fastener according to any one of claims 1 to 6, **characterised in that** extending perpendicular to an axis (A) which bisects the angle (W) between two adjacent longitudinal fins (7) is an area that is part of an internal contour (10) of the central passage (6).

8. Fastener according to any one of claims 1 to 7, **characterised in that** the guide element (4) is constituted by a flexible material.

## Revendications

1. Élément de fixation avec un clou (1) comprenant une tige (2) et une tête (3) à enfoncer dans des matériaux durs tels que béton, roche, acier et analogues ainsi qu'un élément de guidage (4). qui comporte un corps de base sensiblement cylindrique (5) pourvu d'un trou central débouchant (6) ainsi que de trois nervures longitudinales (7), lesquelles sont disposées régulièrement sur la circonférence du corps de base (5), s'étendent sur toute la longueur du corps de base (5) et, en projection axiale, dépassent radialement du contour périphérique de la tête (3) du clou (1), **caractérisé en ce que** sur chaque nervure longitudinale (7) est disposée au moins une languette de serrage (8) qui, dans la direction radiale, dépasse d'une enveloppante (H) formée par les nervures longitudinales (7).

2. Élément de fixation selon la revendication 1, **caractérisé en ce que** la languette de serrage (8) dépasse de l'enveloppante (H) d'une valeur (S) qui correspond à 0,02 à 0,09 fois le diamètre d'enveloppante (D).

3. Élément de fixation selon la revendication 1 ou 2, **caractérisé en ce que** la languette de serrage (8) s'étend sur une partie de la longueur totale du corps de base (5).

4. Élément de fixation selon une des revendications 1 à 3, **caractérisé en ce que** l'extension (E) de la languette de serrage (8) correspond à 0,02 à 0,08 fois la longueur totale du corps de base (5).

5. Elément de fixation selon une des revendications 1 à 4, **caractérisé en ce que**, dans la zone d'extrémité libre des nervures longitudinales (7), la languette de serrage (8) dépasse d'un renfoncement (9) qui s'étend sur toute la longueur du corps de base (5).

6. Élément de fixation selon une des revendications 1 à 5, **caractérisé en ce que** le contour extérieur de la nervure longitudinale (7) s'élargit vers l'extrémité libre de celle-ci.

7. Élément de fixation selon une des revendications 1 à 6, **caractérisé en ce que** perpendiculairement à un axe (A) bissecteur de l'angle (W) entre deux nervures longitudinales voisines (7) s'étend une surface qui fait partie du contour intérieur (10) du trou central débouchant (6).

8. Élément de fixation selon une des revendications 1 à 7, **caractérisé en ce que** l'élément de guidage (4) est réalisé en matière élastique.
